# EUROPEAN PATENT APPLICATION

(11) **EP 2 781 916 A1**
(43) Date of publication of application: **24.09.2014**
(21) Application number: 13160714.5
(22) Date of filing: 22.03.2013
(51) Int. Cl.: G01N 30/72, B01D 15/24, G01N 30/80

(54) **Coupling module**

(71) Applicant: Biotage AB, 751 03 Uppsala (SE)
(72) Inventor: Lars, Johnsson, 754 48 Uppsala (SE); Warngren, Anders, 756 51 Uppsala (SE); Wessman, Anders, 740 20 Vänge (SE); Hallin, Erik, 743 34 Storvreta (SE)
(74) Representative: Brann AB

(57) **Abstract**

The present invention provides an apparatus (100) that can be used to connect a flash chromatography instrument to a fraction collector and a mass detector to perform mass-directed flash chromatography, said apparatus comprising a by-passable delay loop (14) and an active splitter (13).

## Description

### Field of the invention

The present invention relates to instrumentation for flash chromatography and in particular to apparatus for connecting destructive detectors to flash chromatography instruments and fraction collectors.

### Background of the invention

It is well-known in the art of high-performance liquid chromatography (HPLC) to use various non-destructive detectors (such as UV detectors) and destructive mass detectors (such as Evaporative Light Scattering Detectors (ELSD) or mass spectrometers (MS)) to detect the separated molecules in the effluent from the chromatography column and direct an automated fraction collector to collect the separated molecules in separate vials based on signals from the detectors.

Zeng and co-workers (Zeng, 1998) developed a mass-spectrometry-based HPLC system that permitted automated purification of compound libraries using a mass spectrometer to signal fraction collection.

U.S. Patent 6,106,710 disclose a fraction collection system for liquid chromatography wherein the sample stream can be subject to destructive detection without consuming the sample, and wherein the time a sample component is detected at the destructive detector is used to predict when the stream containing that sample component should arrive at the fraction collector.

U.S. published patent application 2001/0038071 disclose a system for separation and analysis comprising a chromatography column, a fraction collector and a mass spectrometer. In order to control the flow to the mass spectrometer, a transfer module is introduced. The transfer module directs a small fraction of the effluent flow from the chromatography column into the mass spectrometer in a controlled and easily adjustable manner. Transfer modules such as the one described in US2001/0038071 are also referred to in the art as "active splitters".

Flash purification is a technique developed by W.C. Still that uses a column or cartridge filled with an insoluble solid support (stationary phase) and elution solvent mixture (mobile phase) to separate and purify a mixture of organic compounds (Still, 1978). The stationary phase and the mobile phase typically have very different polarities, which work in tandem to separate compound mixtures. The separated molecules can then by means of a fraction collector be collected in a purified state for use in a subsequent synthesis or as a final product. Usually, a non-destructive detector, such as an UV detector, is used to detect the separated molecules in the effluent from the column and the detection signal from the UV detector is used to monitor or trigger the fraction collection.

### Summary of the invention

In one aspect the present invention aims to provide an apparatus that can be used to connect a flash chromatography instrument to a fraction collector and a mass detector to perform mass-directed flash chromatography, wherein the flow rate out of the chromatography column can be in the range of 1-200 ml/min. This is achieved by providing a by-passable delay loop in the fluid path leading to the fraction collector, downstream of a splitting of the effluent flow from the flash chromatography column into a primary fluid flow to the fraction collector and a secondary flow to the mass detector.

In a further aspect, the invention aims to provide an integrated system for flash chromatography and mass spectrometry, wherein a user can conveniently analyse a sample using a mass detector and use the obtained data for mass-directed flash chromatography. This is achieved by introducing a separate inlet to the fluid path leading from the flash chromatography column to the mass detector.

In a further aspect, the invention aims to provide an integrated system for flash chromatography and mass spectrometry comprising an active splitter, wherein the active splitter can be by-passed during equilibration of the flash chromatography column. This is achieved by introducing an alternative fluid path bypassing the active splitter.

The invention is as set out in the appended independent claims and preferred embodiments are set forth in the dependent claims.

### Short description of the appended drawings

Figure 1 is an overview of an embodiment of an apparatus according to the invention.
Figure 2 is an overview of an embodiment of an apparatus according to the invention.
Figure 3 is an overview of an embodiment of an apparatus according to the invention.
Figure 4 is an overview of an embodiment of an apparatus according to the invention.
Figure 5 is an overview of an embodiment of an apparatus according to the invention.
Figure 6 is an overview of an embodiment of an apparatus according to the invention.
Figure 7 is an overview of an embodiment of a system according to the invention.
Figure 8 is an overview of an embodiment of a system according to the invention.

### Definitions

The term "mass detector" is used to denote detectors capable of detecting the mass of a molecule or ion. Examples of mass detectors usable in the present invention are mass spectrometers and mass ion detectors. It is currently preferred to use a mass spectrometer, in particular an Electrospray Ionization Mass Spectrometer (ESI-MS).

The term "mass-directed chromatography" is used to denote chromatography wherein detection of the mass of an analyte in an effluent stream from a chromatography column is used to direct a fraction collector to collect fractions of the effluent stream in separate vials.

The term "active splitter" refers to a device that actively transfers a portion of one fluid stream to a second fluid stream.

The term "coupling module" denotes an apparatus that can be used to connect a flash chromatography instrument to a fraction collector and a mass detector to perform mass-directed flash chromatography.

### Detailed description

The present inventors have identified a number of problems with existing technology relating to mass directed chromatography, in particular mass-directed flash chromatography.

Mass detectors require very small amounts of samples and flow rates in the range of µl/min or nl/min. Flash chromatography instruments, on the other hand, may operate at a wide range of flow rates, from 1 ml/min up to 100 or even 200 ml/min. This is several orders of magnitude higher flow rates than used in HPLC (1-1000 µl/min), which in turn may be several orders of magnitude higher than what is tolerated by a mass detector.

The high rate fluid flow from the flash chromatography column can be diverted to a secondary flow having a significantly lower flow rate by means of an active splitter, as is known in the art from e.g. U.S. 2001/0038071, whereby the secondary flow goes to the mass detector and the primary flow goes to a fraction collector.

However, the flow rate in the primary flow cannot be allowed to go above a certain flow rate where a fraction comprising a component that the user of the system wishes to collect arrives at the fraction collector before it is detected by the mass detector. This upper limitation on the flow rate is set by the dimensions of the fluid conduits in the system and by the maximum flow rate into the mass detector.

The upper limitation of the flow rate could be raised by making the fluid path from the flow splitter to the fraction collector longer or wider. This would however entail undesired band broadening at lower flow rates, making the collection of specific compounds less reliable.

The current inventors have solved this problem by providing a coupling module for connecting a flash chromatography instrument to a mass detector and a fraction collector, said coupling module comprising an active splitter and having a by-passable delay loop between the active splitter and the outlet to the fraction collector. The flow from the chromatography column is directed through the delay loop when the flow rate is such that a fraction comprising a component of interest would arrive at the fraction collector before it would arrive at the mass detector, if the flow was to go directly to the fraction collector.

On the other hand, when the flow rate is such that a component of interest would be detected by the mass detector before the corresponding flow fraction comprising the component of interest would arrive at the fraction collector, and providing sufficient time for signal processing and automatic operation of the fraction collector, the delay loop is bypassed and band broadening minimized.

A further aim of the present inventors is to simplify the use of mass detectors in combination with flash chromatography and to provide integration of flash chromatography instruments and mass detectors.

This is done by the present invention by providing the above mentioned coupling module with a fluid inlet situated between the inlet from the flash chromatography column and the active splitter. This provides the user of the system with easy access to injection of an unseparated aliquot of a sample into the system. It also minimizes direct user interaction with the mass detector, facilitating the mass detector to be entirely controlled by the system.

Columns for use in flash chromatography are packed with a chromatography medium, such as silica or a polymeric resin. Before using a flash chromatography column, the column is commonly equilibrated by running 3-5 column volumes of solvent through the chromatography media packed in the column.

This equilibration process may cause fine particles of the chromatography media to be washed out of the column by the solvent. This is not a problem in standard flash chromatography instruments using a non-destructive detector for fraction collection, wherein the fluid conduits are relatively wide and solvent used for equilibration can be directed to the waste container of the fraction collector.

However, due to the minute flows into mass detectors, it is desirable to have fluid conduits with relatively small diameters connecting the mass detector to the column. The fine particles released from the flash chromatography column during equilibration may cause clogging of the narrower fluid conduits used in connection with a mass detector, requiring cleaning or exchange of the conduits. Furthermore, fine particles of chromatography media should not be allowed to pass to the mass detector as they may damage the mass detector.

In one embodiment of the present invention, this problem is solved by providing an alternative fluid path that bypasses the active splitter and thereby the mass detector. The alternative fluid path can be used during equilibration or in any other situation when it is desirable to bypass the active splitter and/or the mass detector. One such situation may be that the user of the system wishes to use only a non-destructive detector, provided as standard in the flash chromatography instrument, for triggering or monitoring fraction collection, without physically disconnecting the coupling module.

One aspect in which flash chromatography differs from High Performance Liquid Chromatography (HPLC) is that the amounts and concentrations of sample are generally about an order of magnitude higher in flash chromatography compared to HPLC. Equipment used for HPLC is therefore not directly applicable to use in flash chromatography, as the high amounts of sample may cause blockage.

One way according to the present invention to avoid blockage is to dilute the effluent flow from the flash chromatography cartridge when it is split to the secondary flow towards the mass detector. The ratio of dilution may be 1:100 to 1:1000, such as 1:250, 1:500 or 1:750. A presently preferred ratio is 1:500.

One way according to the present invention to avoid blockage is to introduce a filter for removing particulate material in a fluid path before the mass detector. Such a filter may have a pore size of 1-5 µm, preferably 2 µm, to prevent particles from entering the mass detector.

In a mass-directed flash chromatography system according to the present invention, a detection signal is sent from the mass detector to a processor when a compound of a certain mass-to-charge ratio is detected. The processor in turn determines, based on instructions provided by the user and/or the provider of the instrument, if this corresponds to an analyte of interest that should be collected and sends a signal to the fraction collector to collect the portion of the effluent fluid stream comprising the analyte or send it to waste.

In order to correlate the detection of an analyte by the mass detector with a specific portion of the effluent fluid stream, the processor may use information of the current flow rates in, and volume of, the respective fluid paths to calculate when the analyte reach the fraction collector. An aliquot of the sample stream containing the analyte of interest can be selectively collected by causing the fraction collector to collect an aliquot from the sample stream at the expected arrival time of the analyte at the fraction collector; or, where the sample collector is continually collecting aliquots in the sample stream, the particular aliquot that is collected at the expected arrival time can be identified as containing the analyte. The correlation of detection at the mass detector and arrival at the fraction collector can be done in various ways as known in the art and is not itself part of the present invention.

In a further aspect, the present invention relates to an integrated system for mass-directed flash chromatography. The system according to this aspect facilitates easy pre-chromatography analysis of a sample by the mass detector, automated transfer of acquired analytical data from the mass detector to a data processing unit, and use of the acquired analytical data to control the collection of fractions of the effluent flow from the chromatography column. Historically, systems for mass-directed chromatography have had separate user interfaces for the chromatography part and the mass detector part of the system, respectively. The configuration of the system according to the invention allows a user to control the entire system and workflow through a single user interface making the operation of the system easier.

The system comprises a coupling module as described above, a flash chromatography instrument, a destructive mass detector and a fraction collector. Destructive mass detectors and flash chromatography instruments, optionally including a fraction collector, as well as stand-alone fraction collectors are commercially available and may be modified for use with a coupling module according to the invention to realize an integrated system according to the invention. A currently preferred flash chromatography system including a fraction collector is commercially available from Biotage AB (Sweden) under the tradename Isolera™ Spektra.

In a further embodiment, the invention relates to a method for separation of a sample into and collection of at least one of said components in at least one separate fraction, comprising the steps
- introducing an aliquot of the sample into a destructive mass detector to obtain individual mass data for a plurality of components comprised in the sample;
- transferring individual mass data for said plurality of components, or a subset thereof, to a data processing unit;
- prompting a user to select at least one component for which mass data has been obtained, for collection;
- separating the components in said sample on a flash chromatography column, wherein a fraction of the effluent flow from the flash chromatography column is continuously at a point of diversion diverted to said mass spectrometer to obtain individual mass data for the plurality of component comprised in the sample, and the remainder of the effluent flow is directed to a fraction collector;
- causing the fraction collector to collect a fraction of the effluent flow comprising the selected component.

In a further embodiment, the invention relates to a computer program for use in the data processing unit of the above described system, said computer program comprising instructions inducing a computer to perform a method for controlling a fraction collector in the system comprising a chromatography column, a fraction collector, a destructive mass detector and a branched fluid path from said column to the fraction collector and the destructive mass detector, respectively, said method comprising the steps:
- prompting a user to introduce an aliquot of a sample to be analyzed into the fluid path leading to the destructive mass detector;
- acquire a spectrum of mass data from a first analysis of the sample by the destructive mass detector;
- prompting the user to select at least one mass data value corresponding to a sample component of interest;
- acquire time-resolved mass data from a second analysis of said sample by the destructive mass detector, subsequent to the sample having been subjected to chromatographic separation;
- acquire data representing a difference in flow time from the chromatography column to the fraction collector and the destructive mass detector, respectively;
- generating a control signal to induce the fraction collector to collect a fraction of an effluent flow from the chromatography column at a time corresponding to the time of detection of the mass corresponding to the sample component of interest plus the difference in flow time from the chromatography column to the fraction collector and the destructive mass detector, respectively.

In order to present a user of the system according to the invention with accessible information regarding the constituents of an unseparated sample injected into the fluid path of the coupling module described above, it may be advantageous to process the detector signal from the mass detector to do e.g. peak integration, noise subtraction, Base peak chromatogram (BPC), and Extracted ion chromatogram (EIC). Standard software solutions for this are available, generally from the providers of the mass detector.

A quadropole mass analyzer, as optionally used in the present invention, produce a time-resolved Total Ion Current (TIC) signal for a number of mass-to-charge ratios (m/z-ratios), the number depending on the resolution of the detector. When a sample is injected into the coupling module secondary flow, the intensity measured at the mass detector varies over time and appears as a peak in time of the TIC intensity signal The TIC signal is also sensitive to low intensity evenly distributed noise and to high intensity random spikes.

One aspect of the invention relates to an improved method for processing detector signal data from a mass spectrometer and presenting it to a user, comprising the steps
- obtaining a plurality of signal intensity values for a plurality of m/z ratios from a mass spectrometer;
- continuosly storing the N highest of said signal intensity values for each m/z ratio in an information storage buffer, wherein N is an integer >1;
- selecting a stored signal intensity value that is lower than the highest stored signal intensity value for a specific m/z ratio, if more than one signal intensity value is stored for said specific m/z ratio;
- continuously presenting said selected signal intensity values for each m/z ratio to a user via a user interaction interface.

In one embodiment N=5 and the value presented to the user is the lowest value stored in the information storage buffer.

This method takes care of problems described above. Since the maximum intensities are collected it is not necessary to synchronize the measurement of the spectrum in time with when the maximum intensity appears at the mass detector. Measurement can be started early and ended late. The low level noise evens out over time and the displayed spectrum stabilizes at the actual signal plus the maximum low level noise amplitude. The spikes are not affecting the displayed spectrum since they are random, unless the number of spikes at an individual mass point is greater than or equal to the size of the buffer.

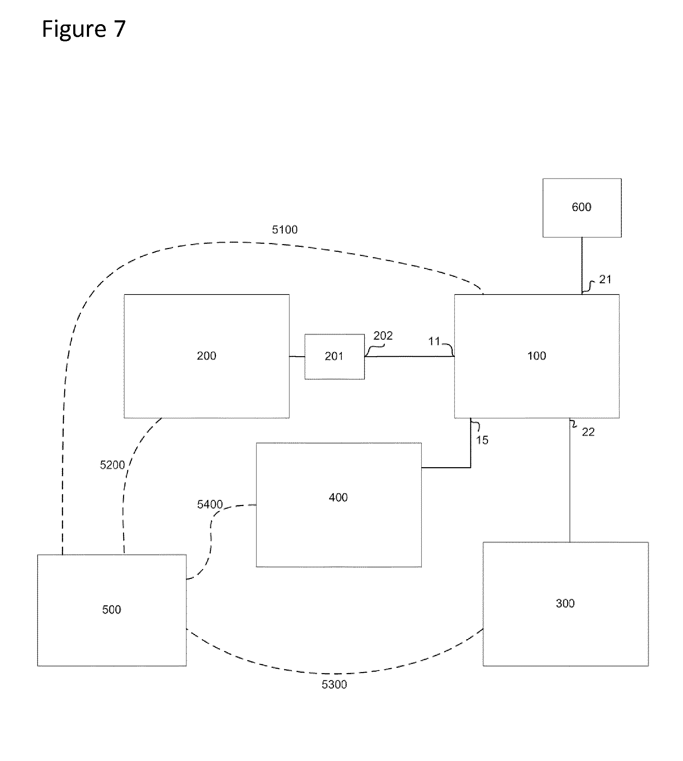

The method described in this aspect may be implemented as a computer program to run on the data processing unit 500, as shown in figure 7. The method and/or the computer program is preferably incorporated into the aspects as described above, so that the processed detector signal is used for prompting a user to select at least one component for which mass data has been obtained, for collection.

The computer programs according to the invention may be configured to perform the method aspects of the present invention and to realize the computer controllable aspects of the apparatus and system aspects of the present invention.

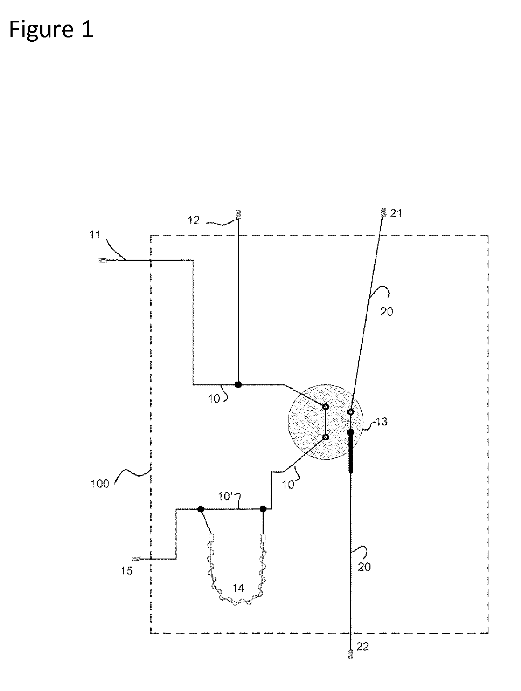

Turning to the figures, figure 1 shows an apparatus 100, also termed coupling module, having a first fluid path 10 comprising an inlet 11 and an outlet 15. The inlet 11 is adapted for connection to a flash chromatography instrument and the outlet 15 is adapted for connection to a fraction collector. The apparatus 100 also comprises a second fluid flow 20 having an inlet 21 adapted for connection to one or more solvent reservoirs and an outlet 22 adapted for connection to a destructive mass detector.

The first and second fluid paths pass an active splitter 13. A suitable active splitter is commercially available from Rheodyne (Rohnert Park, CA, U.S.) under the trade name MRA^{®}. This splitter not only splits the fluid flow from fluid path (10) to fluid paths (10) and (20), but preferably also dilutes the fluid in fluid path (10) in the fluid of fluid path (20). The ratio of dilution may be 1:100 to 1:1000, such as 1:250, 1:500 or 1:750. A presently preferred ratio is 1:500. The dilution can be controlled by the data processing unit (500), shown in figure 7.

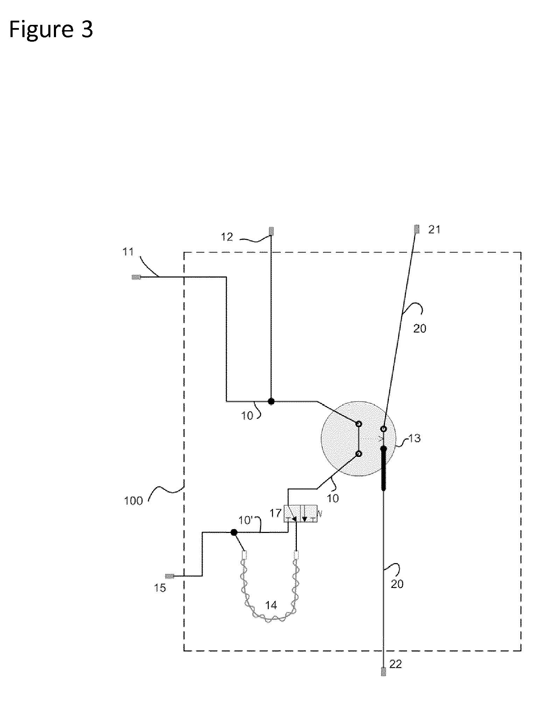

The fluid path 10 continues downstream of the active splitter and includes two parallel fluid paths; one path 10' leading directly to the outlet 15 and one longer delay loop 14. A fluid flow in the fluid path 10 can thus be directed to go either directly to the outlet, along the shorter fluid path 10', or along the longer delay loop 14, but directed to both the shorter fluid path 10' and the delay loop 14 at the same time. In a preferred embodiment shown in figure 3, a valve 17 is included in the fluid path 10 to direct the flow to either the shorter path 10' or the delay loop 14. The valve 17 preferably directs the fluid flow to enter the delay loop 14 when the flow rate in the system is above a threshold value, as described below, and to enter the shorter fluid path 10' when the flow rate in the system is below a threshold value. The valve 17 is preferably under control of data processing unit 500 shown in figure 7.

The fluid path 10 also comprise a further inlet 12, which preferably is adapted for direct manual injection of a sample, optionally dissolved or diluted in a suitable solvent.

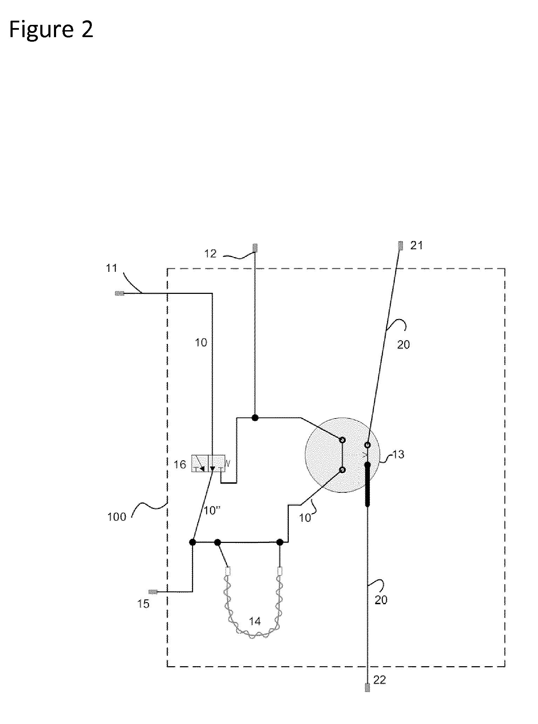

In figure 2, an embodiment of the present invention is shown where the active splitter 13, and consequently also the mass detector, can be bypassed. In this embodiment the fluid path 10 comprise a valve 16 that can direct the fluid flow in fluid path 10 directly to the outlet 15 through a fluid path short-cut 10". The valve 16 is shown to be between the first inlet 11 and the second inlet 12 of the first fluid path 10 in figure 2. It may however also be located between the second inlet 12 and the active splitter 13. The use of fluid path short-cut 10" is useful when there is a risk that the fluid flow in fluid path 10 contains particles that may clog or otherwise damage the active splitter, the mass detector or any other part of the system. Situations when this may occur include *i*.*a*. equilibration of the flash chromatography column. The valve 16 is preferably under control of data processing unit 500 shown in figure 7.

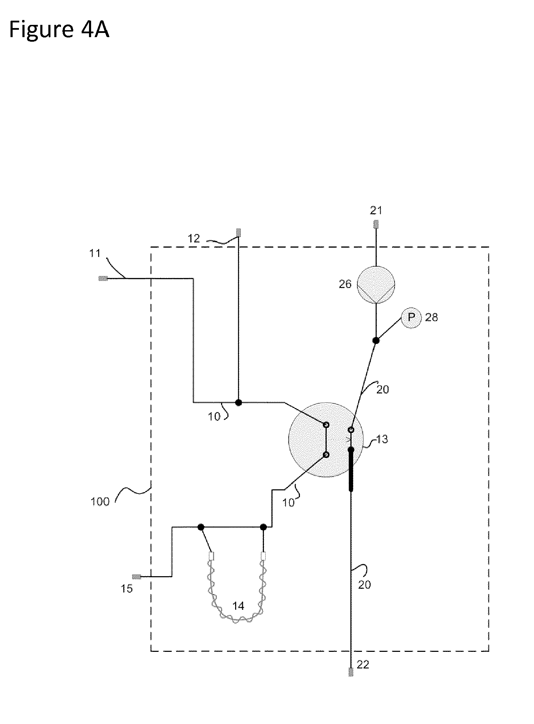

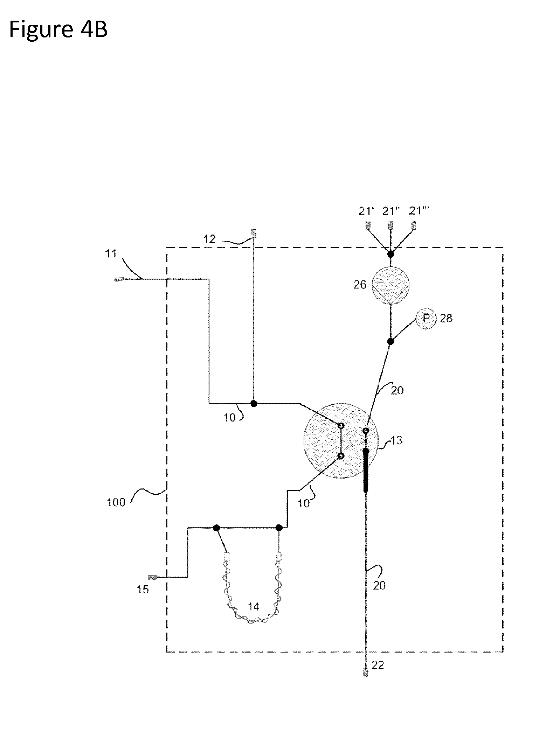

Figure 4A shows an embodiment of the invention comprising a pump 26 arranged in the second fluid path 20, for pumping solvent from an external solvent reservoir. Optionally, a pressure sensor 28 is included to monitor the pressure in the second fluid path 20. The pump 26 may be connected to more than one inlet 21, such as two, three or four. In one embodiment, shown in figure 4B, the pump 26 is connected to three inlets 21', 21" and 21"', for connection to solvent reservoirs containing different solvents.

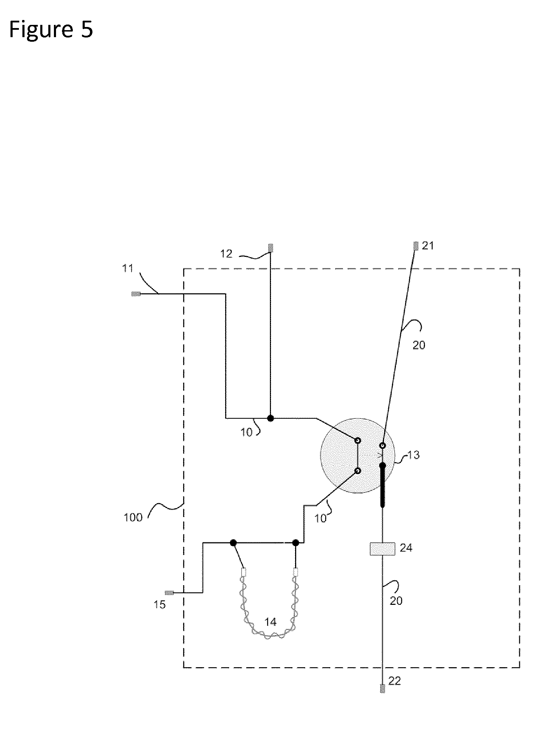

Figure 5 shows an embodiment of the invention that includes a filter 24 in the second fluid path 20 between the active splitter and the mass detector. The filter 24 preferably has a pore size of 1-5 µm, preferably 2 µm, to prevent particles from entering the mass detector.

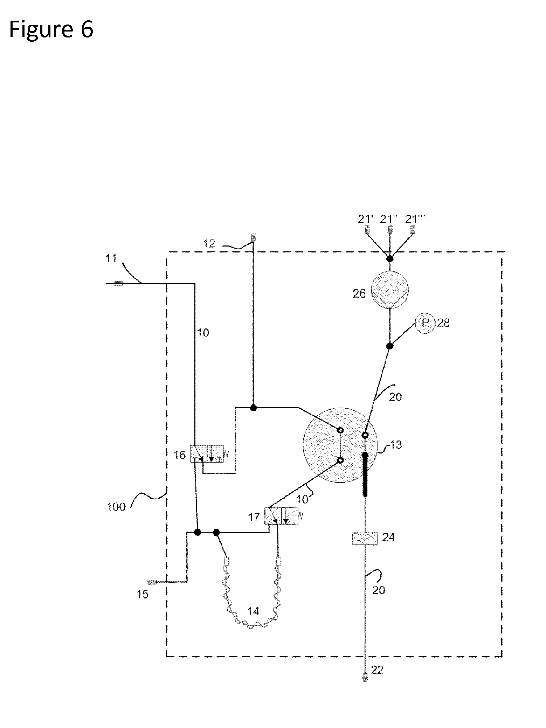

Figure 6 shows a preferred embodiment of the coupling module 100 including all the features shown in figures 1-5.

Figure 7 shows a system for mass-directed flash chromatography according to the present invention. The system comprises a coupling module 100, as described above in figures 1-6. The system further comprises a flash chromatography instrument 200 having a flash chromatography cartridge 201 with an outlet 202 for connection to the inlet 11 of the coupling module 100. Solid lines denote fluid communication between components and dashed lines denote data communication.

The coupling module is further connected to a solvent reservoir 600 that supplies suitable solvent or solvents to arrange the fluid flow through the second fluid path of coupling module 100 to the mass detectors 300. In one embodiment, the solvent reservoir comprises three solvent subreservoirs for containing different solvents, such as one acidic solvent, one basic solvent and one neutral solvent. In such a case, a set of valves may be configured in the fluid paths from the subreservoirs to the inlet 21 of coupling module 100 so that at each time only one type of solvent is delivered to inlet 21. Such valves may be arranged physically within or outside the coupling module 100, and are preferably under control of the data processing unit 500.

The system further comprises a mass detector 300 in fluid connection with the outlet port 22 of the second fluid path of the coupling module 100. A suitable mass detector is an electrospray ionization mass spectrometer, such as available from Microsaic Systems plc (Woking, UK) under the product name 3500 MiD.

The system further comprises a fraction collector 400 in fluid connection with the inlet 21 of the second fluid path 20 of the coupling module 100.

The system further comprises a data processing unit 500 in data communication with the other components of the system through data communication links 5100, 5200, 5300 and 5400, respectively, shown in dotted lines in figure 7. Any data communication links that serve to transfer the relevant data between the components may be used. They may be wire-bound or wireless.

The data processing means 500 is configured to receive detector signals from the mass detector 300 through the data communication link 5300, and information representing the dimensions of, and/or flow rate in, the fluid paths 10, 20 connected to the fraction collector 400 and mass detector 300, respectively. This information may be stored in an information storage unit (not shown) or entered by a user of the system, or monitored by the system, or any combination thereof, and provided to the data processing unit.

When in use, the mass detector 300 generates a detector signal in response to a compound being detected. The data processing unit 500 is configured to compute, based on the information above, a time period between the time of detection of the compound at the mass detector 300 and arrival of the compound at the fraction collector 400, and generate a collector signal to direct the fraction collector 400 to collect a fraction of a fluid stream comprising said compound.

The data processing unit may further be configured to generate a control signal to valve 17 (shown in figures 3 and 6) to by-pass the delay loop 14 if the flow rate in the first fluid path 10 is below a threshold value and to not by-pass the delay loop 14 if the flow rate in the first fluid path is above the threshold value.

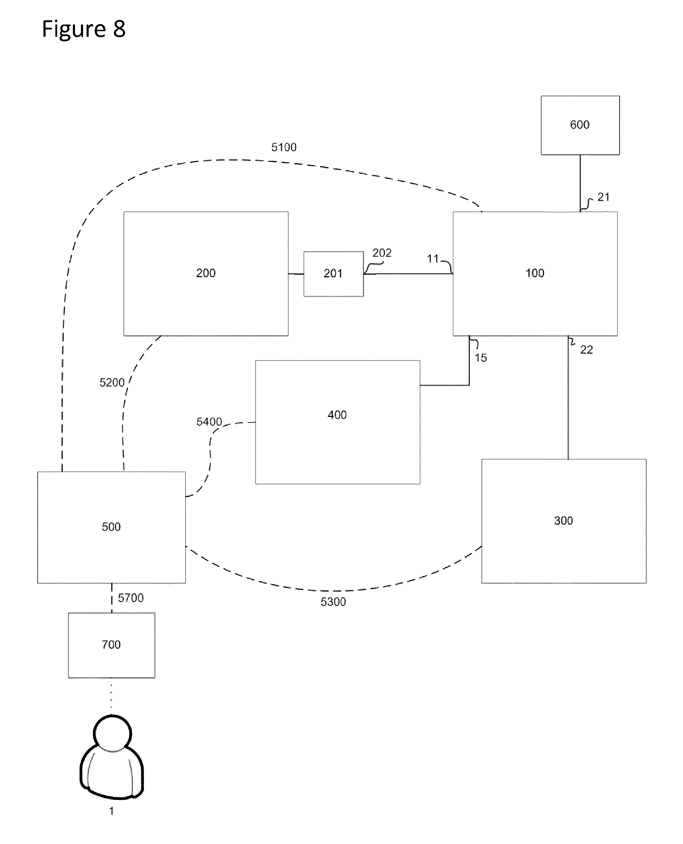

In a preferred embodiment, the system comprises a single user interaction interface 700 for normal interaction with a user 1 as shown in figure 8. The user interaction interface is preferably a touch screen interface, which obviates the need for a keyboard and other means for providing user instructions to the system. The single user interaction interface may be supplemented with communication ports for connecting service interaction interfaces, *i*.*a*. equipment to extract service data from the components of the system, uploading updated firmware to the components or testing the system by running it in a service mode.

The components of the system shown in figures 7 and 8 are shown as individual components for illustrative purposes. One or more components may be integrated into one the same physical instrument, if desirable and according to known practices. For instance, flash chromatography instruments are frequently equipped with a fraction collector and a data processing unit. It is thus practical to put the flash chromatography instrument 200, the fraction collector 400, the data processing unit 500 and corresponding data communication links 5200 and 5400 into one physical entity to reduce the footprint of the system as a whole.

The present invention is not limited to the above-described preferred embodiments. Various alternatives, modifications and equivalents may be used. Therefore, the above embodiments should not be taken as limiting the scope of the invention, which is defined by the appending claims.

### References

Still, W. (1978). Rapid Chromatographic Technique for Preparative Separations with Moderate Resolution. 43(14), pp. 2923-2925.
Zeng, L. e. (1998). Automated analytical/preparative high performance liquid chromatography-mass spectrometry system for the rapid characterization and purification of compound libraries. 794, 3-13.

## Claims

1. Apparatus (100) comprising
a first fluid path (10) comprising
a first inlet (11) for receiving a first fluid stream;
a second inlet (12) for receiving a second fluid stream;
a by-passable delay loop (14);
an outlet (15); and
an active splitter(13) positioned between said first inlet (11) and said by-passable delay loop (14),
wherein the active splitter (13) in use moves a portion of a fluid stream in said first fluid path (10) to a fluid stream in a second fluid path (20),
said second fluid path (20) comprising an inlet (21) upstream of the active splitter (13) and an outlet (22) downstream of the active splitter (13).

2. Apparatus according to any of claim 1, wherein said first fluid path (10) comprises a first valve (16) between the first inlet port (11) of the first fluid path (10) and the active splitter (13) wherein said first valve (16) in one position directs the fluid flow directly to the outlet port (15) of the first fluid path (10) and in another position directs the fluid flow to the active splitter (13).

3. Apparatus according to any of claim 1-2, wherein said first fluid path comprises a second valve (17) between the active splitter (13) and the delay loop (14), wherein said second valve (17) in one position directs the fluid flow to the outlet port (15) of the first fluid path and in another position directs the fluid flow to the delay loop (14).

4. Apparatus according to any of claim 1-3, wherein the second inlet (12) is configured for direct manual injection of a fluid sample.

5. Apparatus according to any of claim 1-4, further comprising in said second fluid path (20) a pump (26) positioned upstream of the active splitter and configured to pump solvent from a solvent reservoir into said second fluid path, and optionally a pressure sensor (28) configured to measure the pressure in the second fluid path (20).

6. Apparatus according to any of claim 1-5, further comprising in said second fluid path a filter (24) positioned downstream of said active splitter.

7. Apparatus according to any of claim 1-6, wherein the active splitter (13) dilutes the portion of the fluid stream in fluid path (10) least 1:100-1:1000, such as 1:250, 1:500 or 1:750, in the fluid stream in the second fluid path (20).

8. System for mass-directed flash chromatography comprising
an apparatus (100) according to any of claims 1-7;
a flash chromatography instrument (200) comprising a chromatography cartridge (201) with an outlet (202) in fluid connection with the first inlet (11) of the first fluid path (10);
a fraction collector (400) in fluid connection with the outlet (15) of the first fluid path (10) of the apparatus (100);
a solvent reservoir (600) in fluid connection with the inlet (21) of the second fluid path (20) of the apparatus (100);
a destructive mass detector (300) in fluid connection with the outlet port (22) of the second fluid path (20);
a data processing unit (500) in data communication with said apparatus (100) through a first data communication link (5100), in data communication with said flash chromatography instrument (200) through a second data communication link (5200), in data communication with said destructive mass detector (300) through a third data communication link (5300), and in data communication with said fraction collector (400) through a fourth data communication link (5400).

9. System according to claim 8, wherein said destructive mass detector (300) in use generates a detector signal in response to a compound being detected in a fluid stream from the second fluid path (20) and said data processing unit (500) is configured to receive the detector signal, data representing the dimensions of the first and second fluid paths (10, 20) and data representing the flow rates in the first and second fluid paths (10, 20), respectively; compute a time period between the time of detection of the compound at the destructive mass detector (300) and arrival of the compound at the fraction collector (400), and generate a collector signal to direct the fraction collector (400) to collect a fraction of a fluid stream comprising said compound.

10. System according to claim 8 or 9, wherein the data processing unit (500) is configured to generate a control signal to by-pass the delay loop (14) if the flow rate in the first fluid path (10) is below a threshold value and to not by-pass the delay loop (14) if the flow rate in the first fluid path is above the threshold value.

11. System according to claim 8-10 comprising a single user interaction device (700), configured to provide information to a user and receive instructions from a user, in data communication with said data processing unit (500) through a fifth data communication link (5700).

12. Method for separation of a sample into components and collection of at least one of said components in at least one separate fraction, comprising the steps
- introducing an aliquot of the sample into a destructive mass detector to obtain individual mass data for a plurality of components comprised in the sample;
- transferring individual mass data for said plurality of components, or a subset thereof, to a data processing unit;
- prompting a user to select at least one component for which mass data has been obtained, for collection;
- separating the components in said sample on a flash chromatography column, wherein a fraction of the effluent flow from the flash chromatography column is continuously at a point of diversion diverted to said mass spectrometer to obtain individual mass data for the plurality of component comprised in the sample, and the remainder of the effluent flow is directed to a fraction collector;
- causing the fraction collector to collect a fraction of the effluent flow comprising the selected component.

13. Method according to claim 12, wherein the fraction collector is caused to collect a fraction of the effluent flow by
- computing a time period Δ*t* between the time *t₀* of detection of the compound at the destructive mass detector and time of arrival *t_{c}* of the compound at the fraction collector based on data representing the flow rates and/or fluid conduit volumes, downstream of the point of diversion towards the destructive mass detector and fraction collector, respectively; and
- generating a collector signal to direct the fraction collector to collect a fraction of a fluid stream comprising said compound at time *t_{c}*.

14. Method according to claim 12 or 13, wherein the fluid in the first fluid path 10 is diluted at least 1:100-1:1000, such as 1:250, 1:500 or 1:750, when transferred to the second fluid path.

15. Computer program comprising instructions inducing a computer to perform a method for controlling a fraction collector in a chromatography system comprising a chromatography column, a fraction collector, a destructive mass detector and a branched fluid path from said column to the fraction collector and the destructive mass detector, respectively, said method comprising the steps:
- prompting a user to introduce an aliquot of a sample to be analyzed into the fluid path leading to the destructive mass detector;
- acquire a spectrum of mass data from a first analysis of the sample by the destructive mass detector;
- prompting the user to select at least one mass data value corresponding to a sample component of interest;
- acquire time-resolved mass data from a second analysis of said sample by the destructive mass detector, subsequent to the sample having been subjected to chromatographic separation;
- acquire data representing a difference in flow time from the chromatography column to the fraction collector and the destructive mass detector, respectively;
- generating a control signal to induce the fraction collector to collect a fraction of an effluent flow from the chromatography column at a time corresponding to the time of detection of the mass corresponding to the sample component of interest plus the difference in flow time from the chromatography column to the fraction collector and the destructive mass detector, respectively.
